# EUROPÄISCHE PATENTANMELDUNG

(11) **EP 0 955 352 A1**
(43) Veröffentlichungstag der Anmeldung: **10.11.1999**
(21) Anmeldenummer: 98250149.6
(22) Anmeldetag: 03.05.1998
(51) Int. Cl.: C10L 3/00, B01D 53/14

(54) **Abreicherung von Siliziumverbindungen aus Brenngasen**

(71) Anmelder: Haase Energietechnik GmbH, 24539 Neumünster (DE)
(72) Erfinder: Lenschow, Gerhard, 24113 Kiel (DE); Martens, Jürgen, 24220 Flintbek (DE)
(74) Vertreter: Patentanwälte Wenzel & Kalkoff

(57) **Zusammenfassung**

Für ein Verfahren zur Abreicherung von Siliziumverbindungen, insbesondere von Siloxanen oder Siliconen, aus Brenngasen, insbesondere aus Deponie- und Klärgasen, bei dem die Abreicherung durch eine Gaswäsche erfolgt, wird als Waschflüssigkeit Wasser verwendet. Es kann Sickerwasser, Wasser aus Kläranlagen oder Leitungswasser verwendet werden. Eine Vorrichtung zur Durchführung eines solchen Verfahrens umfaßt einen Gaswäscher (1) mit einer Zuleitung (11) für das unbehandelte Brenngas (B_{U}) sowie einer weiteren Zuleitung (16) für das Waschwasser aus einem Reservoir (5) und einem Abzug (17) für das gereinigte Gas sowie einem Ablauf (12) für das verbrauchte Wasser, eine Aufnahme (2) für das aus dem Wäscher abgelaufene Wasser, die mit einer Einrichtung (4) zur Aufbereitung der Waschflussigkeit verbunden ist, wobei die Aufbereitungseinrichtung (4) mit dem Wasserreservoir (5) verbunden ist.

## Beschreibung

Die Erfindung betrifft ein Verfahren zur Abreicherung von Siliziumverbindungen, insbesondere von Siloxanen oder Siliconen, aus Brenngasen, insbesondere aus Deponie- und Klärgasen, wobei die Abreicherung durch eine Gaswäsche erfolgt.

Die Nutzung von energiereichen Gasen aus Klärwerken und Deponien mit Gasmotoren wird gegenwärtig stark erschwert oder sogar unmöglich gemacht, weil sich in den Gasmotoren Rückstände bilden, die zu einem erhöhten Wartungsaufwand oder gar zu einer Zerstörung des Motors führen. Die Rückstandsbildung läßt sich ursächlich auf die Verwertung von ungereinigten Deponie- oder Klärgasen zurückführen. Diese Gase enthalten neben den Hauptbestandteilen Methan, Kohlendioxid und Stickstoff einen zunehmenden Anteil an Siliziumverbindungen. Die genaue Zusammensetzung dieser Siliziumverbindungen ist bisher nicht bekannt. Man geht jedoch davon aus, daß es sich insbesondere um flüchtige Siliziumverbindungen handelt, u.a. um Siloxane mit oder ohne organische Reste, insbesondere cyclische Siloxane, aber es können auch Silane und/oder Silicone oder andere siliziumhaltige Verbindungen enthalten sein. Der starke Anstieg an siliziumhaltigen Verbindungen in den Brenngasen wird darauf zurückgeführt, daß immer mehr siliziuinhaltige Produkte auf Deponien gelagert werden oder in Abwässern enthalten sind. Solche Verbindungen sind insbesondere Silicone, die beispielsweise als Siliconöle, Siliconfette oder Siliconharze vorliegen. Sie reagieren wahrscheinlich mit anderen Stoffen auf der Deponie und bilden so die in den Gasen enthaltenen (flüchtigen) Siliziumverbindungen.

Wenn die Siliziumverbindungen in die Motoren gelangen, reagieren sie, und in den Motoren lagern sich insbesondere auf den Zylinderköpfen, an den Wänden und im Brennraum, siliziumhaltige Belege ab. Dieses führt zu verstärktem Verschleiß bis hin zur Zerstörung des Motors. Die Wartungsintervalle werden kürzer, der Wartungsaufwand wird erhöht. Durch die Verwendung von mit Siliziumverbindungen hochbelasteten Brenngasen erlischt oftmals die Gewährleistung der Motorenhersteller. Die Betreiber setzen die Nutzung des Gases auf eigenes Risiko fort und versuchen, mit erhöhtem Wartungsaufwand den Betrieb der Motoren aufrecht zu erhalten. Eine erhöhte Betriebssicherheit und die Aufrechterhaltung des Gewährleistungsanspruches ist derzeit nur mit einer aufwendigen Gasreinigung zu erreichen. Da die Produktion an Siliconverbindungen stetig steigt, ist für die Zukunft auch mit einem Anstieg des hier beschriebenen Problems zu rechnen.

Gegenwärtig werden im wesentlichen drei Verfahren verwendet, um Siliziumverbindungen aus Brenngasen abzureichen, und zwar sind dies die Gaskühlung, Gaswaschverfahren unter Verwendung von organischen Absorbentien, Z.B. Ölen und Gasreinigung durch Aktivkohle-Adsorption.

Bei der Gaskühlung wird die Temperaturabhängigkeit des Sättigungsdampfdruckes der molekularen Siliziumverbindungen im Gas genutzt. Unterschreitet der Sättigungsdampfdruck den Partialdruck der auszukondensierenden Komponente, fällt diese über einen Phasenwechsel aus. Alle Verfahren, die nach diesem physikalischen Prinzip arbeiten, sind jedoch in ihrem Abreicherungsgrad stark von der Eingangskonzentration und der Zusammensetzung der Siliziumverbindungen abhängig und daher nicht universell einsetzbar. Je niedriger die Eingangskonzentration der Siliziumverbindungen ist, desto schlechter ist der erreichbare Abreicherungsgrad bei gleichem Temperaturgradienten. Meßergebnisse zeigen, daß eine signifikante Abreicherung molekularer Siliziumverbindungen im Gas erst bei Temperaturen weit unter 0°C erfolgt. Bei einer experimentell ausgeführten Tieftemperaturkühlung bis -30°C wurden bei hochbelastetem Gas Abreicherungsgrade bis zu 60% festgestellt. Grund dafür ist, daß einige Siliziumverbindungen Kondensationspunkte von unter -30°C aufweisen, so daß für eine vollständige Abreicherung eine noch weitergehende Kühlung erforderlich wäre.

Die relativ geringe Abreicherung in Verbindung mit dein erforderlichen hohen Verfahrensaufwand einer Tieftemperaturkühlung, der hohe Investitions- und Betriebskosten nach sich zieht, führen dazu, daß belastete Deponie- und Klärgase nicht wirtschaftlich genutzt werden können.

Die DE 41 36 344 beschreibt ein Gaswaschverfahren zur Abreicherung von Siliziumverbindungen mit (modifiziertem) Heizöl. Bei diesem Verfahren wird das Gas im Gegenstrom in einer Absorptionskolonne mit der Reinigungsflüssigkeit gewaschen. Die beladene Waschflüssigkeit wird über eine Destillationskolonne geführt, in der die Siliziumverbindungen unter Vakuum und Wärmezufuhr desorbiert werden. Anschließend werden sie in einer Hochtemperaturmuffel verbrannt. Das gereinigte Waschöl wird zurückgekühlt und wieder in den Reinigungskreislauf zurückgegeben. Dieses Verfahren liefert in der Praxis jedoch Abreicherungsgrade von weniger als 50%. Der Verfahrensaufwand zur Gasreinigung ist durch die Kreislaufführung des Absorptionsmittels mit Destillation hoch.

Die bisher wirkungsvollste am Markt verfügbare Gasreinigung basiert auf eine adsorptiven Verfahren unter Verwendung von Aktivkohle, bei der Abreicherungsgrade von mehr als 90% erzielt werden können. Das Verfahren weist jedoch den großen Nachteil auf, daß die Aktivkohle sehr schnell und sehr stark verbraucht wird und nach kurzer Zeit regeneriert werden muß. Da jedoch ein kontinuierlicher Betrieb der Gasreinigungsanlage mit hohen Volumenströmen und damit auch hohen Schadstofffrachten erforderlich ist, muß z.B. eine Aktivkohleregenierung mit Heißdampf vor Ort vorgenommen werden. Dies bedeutet einen hohen Verfahrensaufwand mit hohem Energieeinsatz und damit verbundenen hohen Kosten.

Der Erfindung liegt daher die Aufgabe zugrunde, ein Verfahren zur Verfügung zu stellen, das eine wirkungsvolle Abreicherung der siliziumnhaltigen Verbindungen aus dem Brenngas ermöglicht, die ausreichend ist, um das Gas soweit zu reinigen, daß der Verschleiß der Motoren wieder auf ein akzeptables Maß zurückgeschraubt wird, und das dabei in Bezug auf Aufwand und Kosten die Wirtschaftlichkeit der Energieerzeugungseinrichtung gewährleistet, indem es diese in einem verträglichen Rahmen hält.

Die Aufgabe wird erfindungsgemäß dadurch gelöst, daß für die Abreicherung von Siliziumverbindungen, insbesondere von Siloxanen oder Siliconen, aus energiereichen Gasen, insbesondere aus Deponie- und Klärgasen, mittels Gaswäsche Wasser als Waschflüssigkeit verwendet wird.

Überraschenderweise hat sich gezeigt, daß bei der Verwendung von Wasser als Waschflüssigkeit die Siliziumverbindungen bereits in einer Behandlungsstufe zu über 90% aus den Gasen entfernt werden. Dieser Abreicherungsgrad war nach theoretischen Überlegungen nicht zu erwarten. Wasser als Waschflüssigkeit weist zahlreiche Vorteile auf. Es ist fast überall verfügbar sowie kostengünstig, und eine Abtrennung der Schadstoffe aus der Waschflüssigkeit und damit auch eine Regenerierung sind verhältnismäßig einfach möglich.

Ein weiterer Vorteil besteht darin, daß das Verfahren nur einen geringen Druckverlust mit sich bringt. Schließlich ist der apparative Aufwand gering, da beispielsweise weder eine Gefrierkühlung wie bei dem Gaskühlungsverfahren, noch eine Vakuumdestillation der Waschflüssigkeit erforderlich ist, um diese von den Abfallstoffen zu befreien, wie bei der Gaswäsche mit Öl. Auch werden bei dem Verfahren nicht nur die siliziumhaltigen Verbindungen im Brenngas entfernt. Als positiver Nebeneffekt wird auch noch ein Teil des möglicherweise im Brenngas enthaltenen Schwefelwasserstoffes entfernt; gleiches gilt für vorhandene Staubpartikel.

Für das Verfahren kann Wasser jeglicher Qualität verwendet werden. So kann mit guten Ergebnissen Leitungswasser eingesetzt werden. Ferner kann, da die meisten Deponien über Sickerwasser z.B. aus anderen Prozessen verfügen, dieses Sickerwasser für das Abreicherungsverfahren eingesetzt werden. Sogar Abwasser aus Entsorgungsvorgängen wie z.B. das Konzentrat einer Filtration kann verwendet werden. Die erfindungsgemäße Gaswäsche kann somit an einer beliebigen Stelle in einen Wasseraufbereitungsprozeß zwischengeschaltet werden. Es kann sowohl das gereinigte, aber insbesondere auch das beladene Abwasser eingesetzt werden. Die Verwendung von Wasser aus Kläranlagen ist ebenfalls möglich. Es ist auch denkbar, bei einer an einem Gewässer gelegenen Anlage, aus diesem Wasser zu entnehmen und für das Reinigungsverfahren zu verwenden.

Das Verfahren wird zweckmäßigerweise in einem Gaswäscher durchgeführt. Diesem wird zum einen das unbehandelte Brenngas, zum anderen die Waschflüssigkeit, also das Wasser, zugeführt. Das Wasser wird in dem Wäscher fein versprüht und reinigt so das vorbeiströmende Gas. Der Gaswäscher kann mit oder ohne Füllkörper betrieben werden. Weiterhin ist denkbar, Glockenböden einzusetzen. Die verbrauchte Waschflüssigkeit wird abgezogen.

Vorteilhafterweise wird das Wasser vor dem Zuführen in den Wäscher gekühlt. Durch die Kühlung wird verhindert, daß sich die ausgewaschenen flüchtigen Substanzen, von denen die meisten einen Siedepunkt aufweisen, der etwas über Raumtemperatur liegt, wieder verflüchtigen und erneut in den Gasstrom gelangen. Weiter wird im Gas vorhandene Feuchtigkeit niedergeschlagen und somit ebenfalls aus dem Gas entfernt. Dies stellt einen positiven zusätzlichen Effekt dar, da in Bezug auf den Feuchtigkeitsgehalt ebenfalls bestimmte Anforderungen für die Einspeisung des Brenngases in eine Energieerzeugungseinrichtung bestehen. Die Kühlung erfolgt bevorzugt auf Temperaturen < 10°C. Besonders geeignet ist ein Verfahren, bei dem das Wasser auf ca. 2°C gekühlt wird. Eine solche Kühlung ist im Gegensatz zu der Kühlung im eingangs erwähnten Verfahren der Gaskühlung kostengünstig, da lediglich auf eine Temperatur oberhalb des Gefrierpunktes von Wasser gekühlt werden und nicht bei Minusgraden gearbeitet werden muß.

Eine besonders effektive Abreicherung an Siliziumverbindungen wird erreicht, wenn das Wasser nicht in hochreiner Form vorliegt, sondern Zusätze enthält. Solche Zusätze können sowohl organische als auch anorganische Verbindungen sein, polare unpolare oder amphiphile. Beispiele für solche Zusätze sind ein- oder mehrwertige Carbonsäure, insbesondere mit länger-kettigen Resten, Öle und Alkohole. Gute Ergebnisse wurden beispielsweise durch den Zusatz von Huminsäure erhalten. Bereits geringe Mengen von Zusätzen sind ausreichend, um eine verbesserte Albreicherungswirkung zu erreichen. So kann mit einer zugegebenen Mengen solcher Zusätze in einer Größenordnung von 1g/l bereits eine deutlich verbesserte Abreicherung erzielt werden.

Eine vorteilhafte Verfahrensführung ist die Führung im Kreislauf. Das Wasser wird kontinuierlich oder aber intermittierend aus dem Wäscher abgezogen. Dieser Sumpf wird im Kreis geführt und dem Wäscher erneut zugeführt. Es hat sich herausgestellt, daß eine besonders effektive Reinigung erreicht wird, wenn bei einer solchen Kreislaufführung pro m³ zu reinigendes Gas, 11 Wasser ausgetauscht wird, also 11 Wasser abgezogen und durch frisches Wasser ersetzt wird. Das Wasser kann vor erneutem Eintritt in den Wäscher wiederum gekühlt werden.

Weiterhin kann das aus dem Wäscher abgezogene Wasser auch aufbereitet werden. Dies kann wirkungsvoll durch Filtration geschehen. Von verschiedenen Membranverfahren hat sich sich hierbei die Umkehrosmose als besonders wirksam erwiesen. Für die Reinigung des Wassers sind dabei keine besonders hohen Drücke erforderlich. So ist eine Kreiselpumpe als Antrieb ausreichend. Dadurch halten sich die Kosten für die Aufbereitung des Wassers in vertretbaren Grenzen und gefährden nicht die Wirtschaftlichkeit der Anlage. Das abgeschiedene Konzentrat kann entweder chemisch aufbereitet werden, oder es wird der Abwasserentsorgung der Deponie zugeführt. Das Permeat wird in den Kreislauf zurückgeführt.

Weiterhin kann zur Aufbereitung die Beladbarkeit des Wassers durch Zusatz von beliebigen organischen oder anorganischen Substanzen erhöht werden. Auch eine Kombination der beiden Aufbereitungsmethoden ist möglich.

Eine besonders gründliche Reinigung des Brenngases wird erreicht, wenn mehrere Gaswaschvorgänge hintereinander geschaltet sind. Bereits die Verwendung von zwei Waschstufen bewirkt, daß eine Abreicherung an Siliziumverbindungen von bis zu 95% erreicht wird. Jede Waschstufe kann ihren eigenen Aufbereitungskreis für das Waschwasser aufweisen.

An die vorstehend beschriebenen Stufen kann sich eine Erwärmung des abgereicherten Gases anschließen. Damit wird eine Verringerung des relativen Feuchtigkeitsgehaltes erreicht.

Das Verfahren wird vorzugsweise in einem Gaswäscher durchgeführt. Dazu wird das unbehandelte Brenngas in den Wäscher eingespeist. Über eine weitere Zuleitung wird aus einem Reservoir das Waschwasser in den Wäscher eingeführt. Das Wasser wird vorteilhafterweise fein versprüht. Das verbrauchte Wasser wird gesammelt und - abhängig von der Betriebsweise - kontinuierlich oder intermittierend abgezogen. Das Verfahren kann vorteilhaft im kontinuierlichen Kreislaufbetrieb durchgeführt werden.

Das abgelaufene Wasser kann direkt wieder in den Wäscher eingespeist werden. In einer anderen Ausführungsform wird es in eine Aufnahme geleitet. Von dort kann es in eine Einrichtung zur Aufbereitung geleitet werden. Diese Einrichtung kann vorteilhaft als Umkehrosmoseeinrichtung ausgebildet sein. Der Betrieb kann mit einer Kreiselpumpe erfolgen. Das Permeat wird über eine Zuleitung dem Wasserreservoir zugeleitet. Das Wasserreservoir kann somit entweder aus dem Kreislauf oder von außen mit Wasser versorgt werden. Das Konzentrat wird abgeleitet und einer Entsorgung zugeführt.

Die Vorrichtung kann einen weiteren Einlaß aufweisen, durch den der Waschflüssigkeit Zusätze, insbesondere Salze, zugesetzt werden können.

Weiterhin kann die Vorrichtung einen Kühler umfassen. Dieser ist zweckmäßigerweise zwischen Reservoir und Wäscher angeordnet. Im Kühler wird das Wasser vorzugsweise auf Temperaturen von ca. 2°C gekühlt.

Das abgereicherte Gas wird über einen Abzug aus dem Wäscher abgezogen. An den Abzug kann sich eine Heizeinrichtung anschließen, in der ein Nacherwärmung der Brenngase erfolgt, um den relativen Feuchtigkeitsgehalt der Gase zu verringern.

Die so behandelten Gase werden einer Energieerzeugungseinrichtung wie einem Heizkraftwerk, einer Brennstoffzelle, einer Gasturbine, einem Zündstrahlmotor oder einem Gasmotor zugeführt. Sie können auch zur thermischen Nutzung beispielsweise zum Betrieb einer Muffel eingesetzt werden.

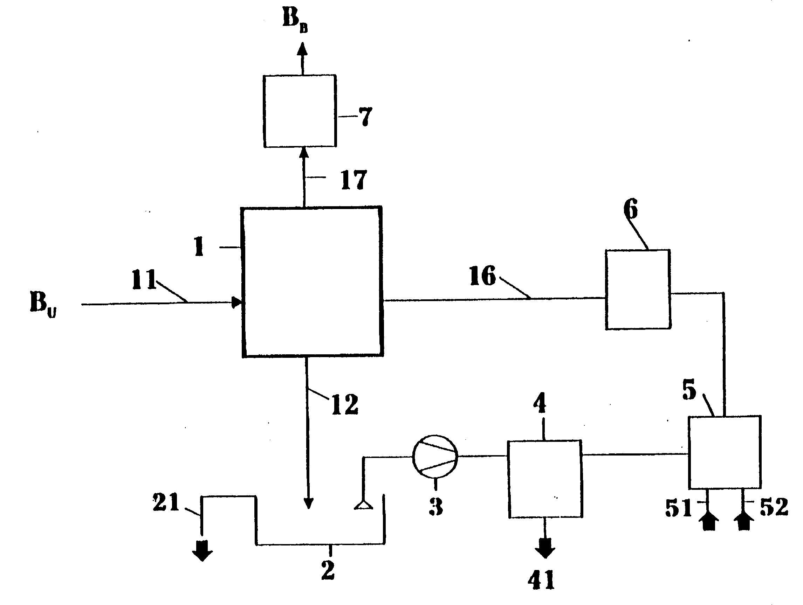

Weitere Vorteile und Ausführungsformen oder -möglichkeiten der Erfindung gehen aus der folgenden Beschreibung des in der schematischen Zeichnung dargestellten Ausführungsbeispiels hervor. Die Figur zeigt einen schematischen Aufbau einer Vorrichtung zur Durchführung des erfindungsgemäßen Verfahrens.

Bezugsziffer 1 bezeichnet einen Wäscher, in dem das unbehandelte Brenngas B_{U} in Bezug auf die in ihm enthaltenen Siliziumverbindungen abgereichert werden soll. Das unbehandelte Brenngas wird dem Wäscher über eine Zuleitung 11 zugeführt. Über eine weitere Zuleitung 16 wird die Waschflüssigkeit, also das Waschwasser, dem Wäscher aus einem Reservoir 5 zugeleitet. Vor Einleiten in den Wäscher 1 kann das Waschwasser in einem Kühler 6 gekühlt werden. Der Wäschersumpf wird nach erfolgter Reinigung des Gases über eine Leitung 2 aus dem Wäscher in eine Aufnahme 2 abgeleitet. Von dort kann das Wasser entweder abgeführt und entsorgt werden, oder aber es wird einer Aufbereitung zugeführt und dem Wäscher 1 erneut zugeführt, so daß das Verfahren als Kreislauf durchgeführt wird.

Bezugszeichen 3 bezeichnet die Kreislaufpumpe, die das Wasser durch die Vorrichtung pumpt. Die Aufbereitung des Wassers erfolgt in der Waschflüssigkeitsaufbereitung 4. Hier werden die Siliziumverbindungen mittels Unkehrosmose vom Wasser abgetrennt. Das die Siliziumverbindungen enthaltende Konzentrat wird über den Ablauf 41 der Entsorgung zugeführt. Das gereinigte Permeat wird den Reservoir 5 zugeleitet. Aufgrund des Flüssigkeitsverlustes durch das abgeführte Konzentrat, wird über eine Zuleitung 51 eine gewisse Menge an neuem Wasser zugeführt. Das Verfahren hat sich als besonders effektiv erwiesen, wenn dem Kreislauf pro m³ zu behandelndes Gas 11 frisches Wasser zugegeben wird. Über einen weiteren Zulaß 52 können dem Wasser Zusätze zugegeben werden.

Das Brenngas wird nach der Behandlung im Wäscher 1 über einen Abzug 17 abgezogen. Im Anschluß wird es einer Nacherwärmung 7 zugeführt, in der der relative Feuchtigkeitsgehalt des Gases verringert wird. Das nach der Nacherwärmung erhaltene behandelte Brenngas B_{B} wird einer Energieerzeugungseinrichtung zugeführt.

## Patentansprüche

1. Verfahren zur Abreicherung von Siliziumverbindungen, insbesondere von Siloxanen oder Siliconen, aus Brenngasen, insbesondere aus Deponie- und Klärgasen, wobei die Abreicherung durch eine Gaswäsche erfolgt, **dadurch gekennzeichnet,** daß als Waschflüssigkeit Wasser verwendet wird.

2. Verfahren nach Anspruch 1, **dadurch gekennzeichnet,** daß als Waschflüssigkeit behandeltes oder unbehandeltes Sickerwasser, Wasser aus Kläranlagen und/oder Leitungswasser eingesetzt wird.

3. Verfahren nach Anspruch 1 oder 2, **dadurch ge-kennzeichnet,** daß das Wasser vor der Wäsche gekühlt wird, vorzugsweise auf eine Temperatur < 10°C, insbesondere auf eine Temperatur von etwa 2°C.

4. Verfahren nach einen der Ansprüche 1 bis 3, **dadurch gekennzeichnet,** daß dem Wasser Zusätze in Form von organischen oder anorganischen Verbindungen zugesetzt werden.

5. Verfahren nach einen der Ansprüche 1 bis 4, **dadurch gekennzeichnet,** daß das Wasser in einem Kreislauf geführt wird.

6. Verfahren nach Anspruch 5, **dadurch gekennzeichnet,** daß das Wasser nach der Wäsche aufbereitet wird, wobei die Aufbereitung insbesondere durch Membranverfahren, vorzugsweise Umkehrosmose erfolgt.

7. Verfahren nach einem der Ansprüche 1 bis 6, **dadurch gekennzeichnet,** daß mehrere Waschstufen hintereinander geschaltet sind.

8. Verfahren nach einem der Ansprüche 1 bis 7, **dadurch gekennzeichnet,** daß sich an die Abreicherung eine Erwärmung des Brenngases anschließt.

9. Vorrichtung zur Durchführung des Verfahrens nach einem der Ansprüche 1 bis 8 mit
einem Gaswäscher (1) mit einer Zuleitung (11) für das unbehandelte Brenngas (B_{U}) sowie einer weiteren Zuleitung (16) für das Waschwasser aus einem Reservoir (5) und einem Abzug (17) für das gereinigte Gas sowie einem Ablauf (12) für das verbrauchte Wasser;
einer Aufnahme (2) für das aus dem Wäscher abgelaufene Wasser, die mit einer Einrichtung (4) zur Aufbereitung der Waschflüssigkeit, insbesondere durch Umkehrosmose, verbunden ist,
wobei die Aufbereitungseinrichtung (4) mit dem Wasserreservoir (5) verbunden ist.

10. Vorrichtung nach Anspruch 9, **dadurch gekennzeichnet,** daß die Vorrichtung zwischen Reservoir (5) und Wäscher (1) einen Kühler (6) zur Kühlung des zuzuführenden Waschwassers aufweist.

11. Vorrichtung nach Anspruch 9 oder 10, **dadurch gekennzeichnet,** daß der Wäscher (1) mit Füllkörpern oder mit Glockenbäden betrieben wird.

12. Verwendung von Wasser zur Entfernung von flüchtigen Siliziumverbindungen, insbesondere von Siloxanen, aus Brenngasen, insbesondere aus Deponie- und Klärgasen.
